# EUROPÄISCHE PATENTSCHRIFT

(11) **EP 1 494 191 B1**
(45) Veröffentlichungstag und Bekanntmachung des Hinweises auf die Patenterteilung: **26.07.2006**
(21) Anmeldenummer: 04100499.5
(22) Anmeldetag: 10.02.2004
(51) Int. Cl.: G08B 25/10, H04M 11/04

(54) **Verfahren zur Anmeldung eines neuen Teilnehmers in einem Funksystem einer Gefahrenmeldeanlage**
Method for registration of a new user in a radio alarm system
Procédé de la demande d'un utilisateur au système d'alarme radio

(30) Priorität: 17.04.2003 DE 10317962
(43) Veröffentlichungstag der Anmeldung: 05.01.2005
(73) Patentinhaber: SIEMENS AKTIENGESELLSCHAFT, 80333 München (DE)
(72) Erfinder: Schropp, Werner, 81541 München (DE); Schreyer, Karlheinz, 82515 Wolfratshausen (DE)

(56) Entgegenhaltungen:
- WO-A-00/21053
- WO-A-00/52658
- WO-A-01/15112

## Beschreibung

Die Erfindung betrifft ein Verfahren zur Anmeldung eines neuen Teilnehmers in einem Funksystem einer Gefahrenmeldeanlage mit einer Zentrale und einer Mehrzahl von Teilnehmern in einer oder mehreren Funkzellen, wobei die Zentrale und jeder Teilnehmer jeweils eine Sende- und eine Empfangseinrichtung aufweisen und wobei jeder Teilnehmer mit der Zentrale direkt oder indirekt über einen oder mehrere andere Teilnehmer als Zwischenstationen in Funkkontakt treten kann.

Gefahrenmeldesysteme, bei denen Meldungen über Funk übertragen werden, bieten viele Vorteile gegenüber drahtgebundenen Netzen. Insbesondere spart man dabei den Installationsaufwand solcher Netze, und die einzelnen Teilnehmer können flexibel an beliebigen Orten angeordnet und umgesetzt werden. Die Gefahrenmeldesysteme umfassen dabei Meldesensoren als Teilnehmer bzw. Nebenstationen, die im Fall eine detektierten Gefahr, z. B. Brand oder Einbruch, eine Gefahrenmeldung über eine Funkverbindung an eine Zentrale übermitteln, in der zur Beseitigung der Gefahr weitere Maßnahmen, wie Alarmierung der Feuerwehr oder der Polizei, eingeleitet werden.

Aus der WO 92/22883 ist ein Alarmsystem bekannt, in dem batteriegespeiste Brandmelder und Einbruchmelder über eine Funkübertragung ihre jeweilige Adresse, die gemessenen Daten der Brand- oder Einbruchmelder sowie Daten über die Restenergie der Batterien an eine Zentrale übermitteln. Solche unidirektionalen Systeme sind zwar kostengünstig aufgebaut, eignen sich allerdings nur für Anlagen mit geringen Risiken. Um Energie zu sparen, sind dabei die Melder nur mit einem Sender ausgerüstet und melden sich nur in großen Zeitabständen, beispielsweise alle 24 Stunden, bei der Zentrale. Sie sind nicht in der Lage, gezielt nach freien Funkkanälen zu suchen, um auch bei besetzten Funkkanälen eine Übertragung zu gewährleisten. Da die Melder keine Quittung empfangen können, kann ein fehlerfreier Informationstransport nicht sichergestellt werden.

Im Vergleich zu solchen unidirektionalen Systemen kann mit bidirektionalen Verbindungen in Funk- Gefahrenmeldeanlagen die Übertragungssicherheit erheblich gesteigert werden. Allerdings erhöht ein Empfängerteil die Kosten, das Gerät selbst ist größer und verbraucht mehr Strom als ein reiner Sender. Aus der EP 911 775 ist beispielsweise ein Gefahrenmeldesystem bekannt, welches bidirektional aufgebaut ist und dessen Komponenten energiesparend ausgelegt sind. Störungen in einem solchen System können in weniger als 100 Sekunden sicher erkannt werden; allerdings können sogenannte Fading-Löcher zu unnötigen Störungsmeldungen führen. Zusätzliche Mechanismen sind notwendig, um das Problem zu lösen.

Solange jeder Teilnehmer direkt mit der Zentrale in Verbindung treten muss, ist bei den einzelnen Teilnehmern eine relativ hohe Sendeleistung erforderlich. Energiemäßig günstiger sind deshalb sogenannte routende Systeme, bei denen weiter entfernte Teilnehmer sich anderer Teilnehmer als Zwischenstationen, sogenannter Router, bedienen, um mit der Zentrale in Funkverbindung zu treten. So ist aus der EP 833 288 ein Verfahren für Funkübertragung in einer Gefahrenmeldeanlage bekannt, bei dem Messdaten eines Meldesensors zur Zentraleinheit über weitere Meldesensoren als Zwischenstationen übertragen werden können, wenn eine direkte Funkverbindung zur Zentrale wegen einer zu geringen Funkreichweite nicht besteht oder wenn sie gestört ist. Dafür ist eine zeitvariante hierarchische Verbindungsstruktur der Meldesensoren untereinander vorgesehen.

Aus WO 00/52658 ist ein Gefahrenmeldesystem bekannt, welches eine Vielzahl von fest installierten Einheiten aufweist, die über ein Kommunikationsnetzwerk mit einem Kommunikationszentrum in Verbindung stehen. Außerdem ist eine Vielzahl von mobilen tragbaren Einheiten offenbart, die über die fest installierten Einheiten ebenfalls drahtlos mit dem Kommunikationszentrum Verbindung aufnehmen können. In den fest installierten Einheiten sind Tabellen hinterlegt, in denen der bevorzugte nächste Nachbar, an den eine Nachricht übermittelt werden kann, hinterlegt ist. Dabei ist vorgesehen, dass diese Tabellen mit den Routing-Informationen während der Initiierung des Netzwerks aufgebaut und periodisch aktualisiert werden. Es ist allerdings nicht offenbart, wie dies geschieht.

In WO 01/15112A1 ist beschrieben, wie ein Kommunikationsmodul in ein drahtloses Kommunikationssystem eingesetzt werden kann, wobei das Kommunikationssystem mindestens ein Kontrollmodul und eine Vielzahl von Kommunikationsmodulen beinhaltet. Das System ist so ausgelegt, dass Nachrichten entweder direkt oder indirekt zwischen Modulen ausgetauscht werden können und jedes Modul sowohl drahtlose Nachrichten erhalten als auch drahtlose Nachrichten an weitere Kommunikationsmodule oder das zentrale Kontrollmodul weiterleiten kann. Falls ein neues Kommunikationsmodul ins System eingesetzt wird, übermittelt dieses ein erstes Signal in einem Setup-Modus. Falls dieses erste Signal bei mindestens einem Paar der weiteren Kommunikationsmodule detektiert wird, wird das eingesetzte Kommunikationsmodul durch ein Signal vom zentralen Kontrollmodul installiert, um anschließend direkt mit den mindestens zwei Modulen zu kommunizieren.

Ein drahtloses Brandmelde- und Gefahrenmeldesystem für den Hausbereich ist ebenfalls aus WO 00/21053 bekannt. Darin sind die einzelnen Rauchdetektoren und anderen Sensoren ebenfalls mit Sende- und Empfangseinrichtungen ausgestattet. Die einzelnen Sensoren können untereinander kommunizieren und bilden somit ein Netzwerk.

Um in solchen bidirektionalen Systemen mit flexiblen Routing-Möglichkeiten auf Störungen im Funkverkehr und Änderungen in der Teilnehmerstruktur flexibel reagieren zu können und stets sichere Verbindungen zu gewährleisten, ist es notwendig, dass in einem solchen System die Zugehörigkeit eines Teilnehmers zu dem System allen anderen Teilnehmern erkenntlich ist. Möglich wäre dies dadurch, dass die Seriennummer eines Melders als Identifikation verwendet wird, die allen anderen Teilnehmern bekannt ist, so dass sie nur den bekannten Meldern eine Teilnahme am Datenverkehr ermöglichen. Nachteilig dabei ist jedoch, dass eine solche Seriennummer relativ lang ist und deshalb in den einzelnen Teilnehmern relativ viel Speicherplatz benötigt. Außerdem muss bei jeder Anmeldung eines neuen Teilnehmers dessen Identifikation bzw. Seriennummer allen anderen mitgeteilt werden, was sehr lange dauert und den Funkkanal erheblich belastet. Wenn zudem die Anmeldung eines Melders auch über mehrere Teilnehmer hinweg möglich sein soll, so muss die Zellenidentifikation, das heißt, die Seriennummer, vorher eingegeben werden, da die Funkzelle Informationen von noch nicht angemeldeten Teilnehmern nicht übertragen kann. Die dazu notwendige Einstellung kann nur manuell vorgenommen werden und ist deshalb relativ fehlerträchtig. Solche Fehler in der Identifikationsnummer können bei Inbetriebsetzung auch kaum erkannt werden.

Ziel der Erfindung ist es deshalb, bei einem System der Eingangs genannten Art ein Verfahren anzugeben, mit dem neue Teilnehmer schnell im System angemeldet werden können und dabei die jeweiligen Funkschnittstellen nur wenig belasten, wobei in den einzelnen Teilnehmern nur ein Minimum an Speicherplatz für diesen Zweck benötigt wird.

Erfindungsgemäß erfolgt deshalb die Anmeldung eines neuen Teilnehmers in einem Funksystem der Eingangs genannten Art mit folgenden Schritten:
- Der neue Teilnehmer sendet ein Suchsignal an alle erreichbaren Teilnehmer und wählt aus den antwortenden Teilnehmern eine erste Zwischenstation aus,
- Der neue Teilnehmer sendet an die erste Zwischenstation einen Anmeldewunsch in Form einer Nachricht, welche eine vorläufige eigene Adresse und als Zielangabe die der ersten Zwischenstation zugeordnete Zentrale enthält,
- sobald der Anmeldewunsch von der ersten Zwischenstation zur Zentrale weitergeleitet wurde, entscheidet die Zentrale über Annahme oder Ablehnung des Anmeldewunsches und
- bei Annahme sendet die Zentrale direkt oder über Zwischenstationen eine Antwort, welche eine Teilnehmernummer und einem System-Identifikator enthält, welche dann von dem neuen Teilnehmer übernommen und gespeichert werden.

Bei dem erfindungsgemäßen Verfahren nimmt also eine FunkKomponente, die ein neuer Teilnehmer werden möchte, zunächst mit einem beliebigen anderen Teilnehmer Kontakt auf und weist ihn an, seinen Anmeldewunsch an die Zentrale zu übertragen. Anschließend wartet sie auf die Zuteilung der Systemadresse (oder Zellenadresse) und einer für ihn bestimmten Melderadresse von der Zentrale. Bei diesem Vorgang spielt es keine Rolle, ob der Datenverkehr direkt mit der Zentrale oder über andere Teilnehmer des Systems geschieht. In den Teilnehmern wird dabei nur ein Minimum an Speicherplatz benötigt, da das System mit einem System-Identifikator bzw. Zellen-Identifikator arbeitet, der in allen Teilnehmern gleich ist. Während der Inbetriebsetzungsphase bleibt der Datenverkehr sehr gering, da außer der zentralen Einrichtung und dem anzumeldenden Teilnehmer alle anderen Teilnehmer in ihrem normalen Betriebsmodus verbleiben.

Bei dem Anmeldevorgang wird die vorläufige Adresse des neuen Teilnehmers in Bezug auf den Routing-Mechanismus genauso behandelt wie eine endgültige Adresse. Auf dem Weg der Meldung zur Zentrale, der über mehrere Zwischenstationen führen kann, werden die einzelnen Stationen so markiert, dass die Rückmeldung von der Zentrale zu dem sich anmeldenden Teilnehmer auf dem gleichen Weg zurücklaufen kann. Dies geschieht entweder durch ein Aufsammeln der passierten Melder im Telegramm oder durch eine Kennzeichnung der durchlaufenen Teilnehmer, um ein Routing mit verteilten Listen zu ermöglichen.

In weiterer Ausgestaltung des erfindungsgemäßen Verfahrens ist vorgesehen, dass bei Ablehnung des Anmeldewunsches durch die Zentrale der neue Teilnehmer eine andere erste Zwischenstation auswählt und einen Anmeldewunsch über diesen an dessen Zentrale sendet. Abgelehnt wird beispielsweise ein Teilnehmer, wenn er nicht zu dem Funksystem gehören soll, bei dem er sich anzumelden versucht, oder wenn die Zentrale den zusätzlichen Teilnehmer aus anderen Gründen nicht akzeptiert, weil etwa in dem betreffenden Funksystem aus Kapazitätsgründen keine zusätzlichen Teilnehmer aufgenommen werden sollen.

Wie aus dem Patentanspruch 1 hervorgeht, geschieht die Kontaktaufnahme des anzumeldenden Teilnehmers in zwei Schritten. Er sendet zunächst ein Suchtelegramm an alle erreichbaren Funkpartner, die unter Umständen zu unterschiedlichen Funksystem oder Funkzellen gehören können. Aus den antwortenden Teilnehmern wählt er einen aus und sendet über diesen seinen Anmeldungswunsch an die Zentrale. Um Kollisionen zu vermeiden, ist im Antwortzeitraum einer ungerichteten Suchabfrage (Broadcast-Abfrage) jedem möglichen Teilnehmer eines Funksystems ein fester, sich mit anderen nicht überlappender Zeitschlitz zugeordnet.

In vorteilhafter Ausgestaltung des erfindungsgemäßen Verfahrens wird weiterhin vorgesehen, dass nach dem Suchsignal des neuen Teilnehmers alle in Funkreichweite befindlichen Teilnehmer ein Antworttelegramm mit ihrer Adresse und einer Identifikation ihres Funksystems an den neuen Teilnehmer senden, dass dieser die Adressen und die zugehörige System-Identifikation in einer Liste potentieller Zwischenstationen abspeichert, deren Reihenfolge er nach einem vorgegebenen Bewertungs-Algorithmus festlegt, und dass der neue Teilnehmer seine erste Zwischenstation aus der Liste nach deren Reihenfolge auswählt und bei Ablehnung seines Anmeldewunsches durch das Funksystem der ersten Zwischenstation nach der vorgegebenen Reihenfolge der Liste jeweils eine weitere Zwischenstation für eine erneute Absendung des Anmeldewunsches auswählt. Für die Festlegung der Reihenfolge auf der Liste potentieller Zwischenstationen ist vorzugsweise die Stärke des jeweiligen Antwortsignals maßgebend. Andere Bewertungskriterien können dahin bestehen, dass zunächst geprüft wird, ob die Zentrale selbst antwortet; in diesem Fall kann die Zentrale an die erste Stelle der Liste gesetzt werden. Die Zahl der Hierarchiestufen zwischen einer Zentrale und den jeweils antwortenden Teilnehmern können ebenfalls für die Reihenfolge maßgebend sein; schließlich kann auch die Zellennummer bzw. Systemnummer der antwortenden Teilnehmer berücksichtigt wird.

Nach erfolgreicher Anmeldung eines neuen Teilnehmers bei der Zentrale ist in einer weiteren Ausgestaltung der Erfindung vorgesehen, dass der neue Teilnehmer ein zweites Suchsignal an alle in Funkreichweite befindlichen Teilnehmer aussendet und anschließend die Zentrale über alle in seiner Funkreichweite erreichbaren Teilnehmer des betreffenden Funksystems informiert. Er kann dabei auch mitteilen, mit welcher Feldstärke er jeden einzelnen Teilnehmer empfangen kann. Daraus kann dann die Zentrale eine Systemkonfiguration für eine optimale Nachrichtenübermittlung über Zwischenstationen erstellen und den Teilnehmern des Funksystems mitteilen.

Die Erfindung wird nachfolgend an einem Ausführungsbeispiel anhand der Zeichnung näher erläutert. Es zeigt
Figur 1 eine schematische Konfiguration zweier benachbarter Funksysteme, zwischen denen ein neuer Teilnehmer sich anzumelden versucht,
Figuren 2 bis 6 eine schematische Darstellung der weiteren Schritte bei der Anmeldung des neuen Teilnehmers in einem der Funksysteme und
Figur 7 den Anmeldungswunsch des neuen Teilnehmers in dem zweiten Funksystem nach einer Ablehnung in dem ersten Funksystem.

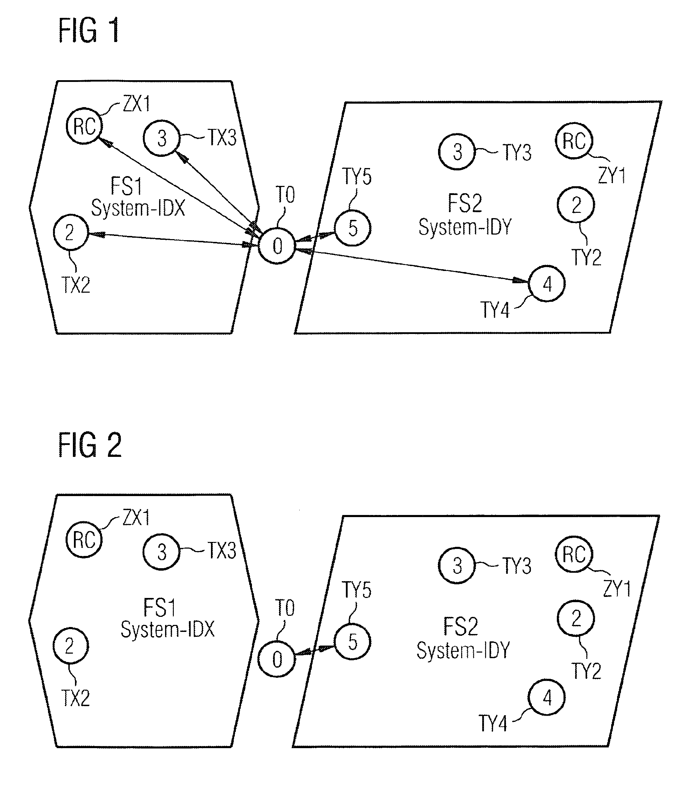

Die Figur 1 zeigt schematisch zwei benachbarte Funksysteme, nämlich ein Funksystem FS1 mit einem System-Identifikator X und ein Funksystem FS2 mit einem System-Identifikator Y. Das Funksystem FS1 enthält beispielsweise eine Zentrale ZX1 und die Teilnehmer TX2 sowie TX3, während das Funksystem FS2 eine Zentrale ZY1 sowie weitere Teilnehmer TY2, TY3, TY4 und TY5 aufweist. Eine Funkkomponente T0 versucht, sich als neuer Teilnehmer in einem der beiden Funksysteme anzumelden.

Zu diesem Zweck sendet der neue Teilnehmer T0 zunächst ein ungerichtetes Suchtelegramm (sogenanntes Broadcast-Telegramm) an alle erreichbaren Teilnehmer beider Funksysteme. In Figur 1 sind die Teilnehmer, welche ein Suchtelegramm empfangen und darauf geantwortet haben, mit dem Teilnehmer T0 über Pfeile verbunden. Der anzumeldende Teilnehmer T0 kennt nun alle erreichbaren potentiellen Zwischenstationen und speichert ihre Adressen sowie ihren jeweiligen System-Identifikator X bzw. Y ab. Nach einem oben beschriebenen Bewertungs-Algorithmus erstellt er eine Liste potentieller Zwischenstationen und wählt für seine Kontaktaufnahme den an erster Stelle der Liste stehenden Teilnehmer aus. In dem dargestellten Beispiel soll der Teilnehmer TY5 dieser erste als Zwischenstation dienende Partner sein, da er dem Teilnehmer T0 am nächsten liegt und deshalb sein Antwortsignal von diesem am stärksten empfangen werden konnte. Der neue Teilnehmer T0 sendet also seinen Anmeldewunsch an den Teilnehmer TY5, wie in Figur 2 gezeigt.

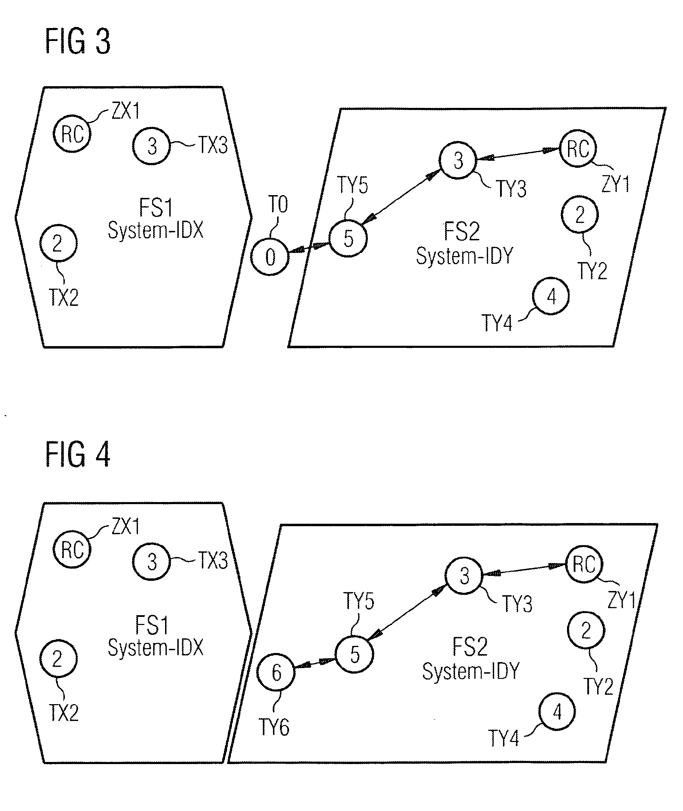

Figur 3 zeigt, wie der Anmeldewunsch des neuen Teilnehmers T0 über den Teilnehmer TY5 und über TY3 als weitere Zwischenstation zur Zentrale ZY1 weitergeleitet wird. Die Funkverbindungen, die dabei aufgebaut werden, sind jeweils als Doppelpfeile dargestellt. Bei Annahme des neuen Teilnehmers durch die Zentrale ZY1 sendet die Zentrale über den gleichen Weg ein Antworttelegramm, in welchem sie dem neuen Teilnehmer seine neue Teilnehmernummer TY6 und die System-Identifikation Y mitteilt. Wie in Figur 4 gezeigt ist, ist dieser neue Teilnehmer TY6 nunmehr in das Funksystem FS2 integriert.

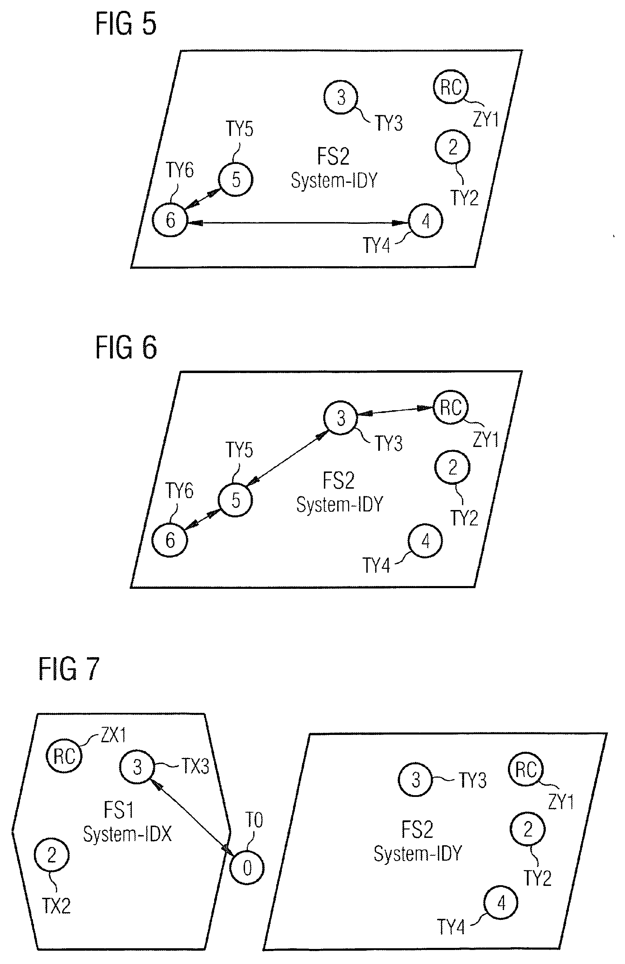

Der neue Teilnehmer TY6 sendet nun nochmals ein Suchtelegramm an alle erreichbaren Teilnehmer, allerdings nur an die zum eigenen Funksystem FS2 gehörigen Teilnehmer, und wartet auf deren Antwort. Es sind dies gemäß Figur 5 die Teilnehmer TY4 und TY5 in dem gleichen Funksystem FS2. Der neue Teilnehmer TY6 teilt nun über den gleichen Weg wie gemäß Figur 3 und Figur 4 der Zentrale ZY1 mit, welche Teilnehmer er empfangen kann und mit welcher Feldstärke er ihre Signale empfängt.

Wird jedoch bereits in dem in Figur 3 dargestellten Stadium des Anmeldevorgangs dem neuen Teilnehmer T0 durch die Zentrale ZY1 deren Ablehnung mitgeteilt, so wählt der neue Teilnehmer T0 gemäß Figur 7 aus seiner Liste potentieller Zwischenstationen die nächstfolgende, nämlich den Teilnehmer TX3 in dem Funksystem FS1 aus. Danach vollzieht sich der Anmeldevorgang in dem Funksystem FS1 in der gleichen Weise, wie dies anhand der Figuren 4 bis 6 bereits für das Funksystem FS2 beschrieben wurde.

## Patentansprüche

1. Verfahren zur Anmeldung eines neuen Teilnehmers in einem Funksystem einer Gefahrenmeldeanlage mit einer Zentrale und einer Mehrzahl von Teilnehmern, wobei die Zentrale (ZX1, ZY1) und jeder Teilnehmer (TX2, TX3; TY2 bis TY5) jeweils eine Sende- und eine Empfangseinrichtung aufweisen und wobei jeder Teilnehmer mit der Zentrale direkt oder indirekt über einen oder mehrere andere Teilnehmer als Zwischenstationen in Funkkontakt treten kann, mit folgenden Schritten:
- Der neue Teilnehmer (T0) sendet eine Suchabfrage in Form eines ungerichteten Suchtelegramms an alle erreichbaren Teilnehmer (TY5, TY4; ZX1, TX2, TX3) und wählt aus den antwortenden Teilnehmern eine erste Zwischenstation (TY5) aus;
- der neue Teilnehmer (T0) sendet an die ausgewählte erste Zwischenstation (TY5) einen Anmeldewunsch in Form einer Nachricht, welche eine vorläufige eigene Adresse (T0) und als Zielangabe die der ersten Zwischenstation zugeordnete Zentrale (ZY1) enthält;
- sobald der Anmeldewunsch von der ersten Zwischenstation (TY5) zur Zentrale (ZY1) weitergeleitet wurde, entscheidet die Zentrale über Annahme oder Ablehnung des Anmeldewunsches, und
- bei Annahme sendet die Zentrale (ZY1) über die erste Zwischenstation (TY5) ein Antworttelegramm, welches eine Teilnehmernummer (TY6) und einen System-Identifikator (Y) enthält, welche von dem neuen Teilnehmer übernommen und gespeichert werden.

2. Verfahren nach Anspruch 1,
**dadurch gekennzeichnet, dass** bei Ablehnung des Anmeldewunsches durch die Zentrale (ZY1) der neue Teilnehmer (T0) eine andere erste Zwischenstation (TX3) einer anderen Funkzelle (FS1) auswählt und einen Anmeldewunsch über diese an deren Zentrale (ZX1) sendet.

3. Verfahren nach Anspruch 1,
**dadurch gekennzeichnet,**
- **dass** nach dem ungerichteten Suchtelegramm des neuen Teilnehmers (T0) alle in Funkreichweite befindlichen Teilnehmer (TY4, TY5; ZX1, TX2, TX3) mit ihrer Adresse und einem Identifikator ihres Funksystems (Y; X) an den neuen Teilnehmer (T0) senden,
- **dass** dieser die Adressen und die zugehörigen System-Identifikatoren in einer Liste potentieller Zwischenstationen abspeichert, deren Reihenfolge er nach einem vorgegebenen Bewertungs-Algorithmus festlegt, und
- **dass** der neue Teilnehmer seine erste Zwischenstation (TY5) aus der Liste nach deren Reihenfolge auswählt und bei Ablehnung seines Anmeldewunsches durch das Funksystem der ersten Zwischenstation (TY5) nach der vorgegebenen Reihenfolge der Liste jeweils eine weitere Zwischenstation (TX3) für eine erneute Absendung des Anmeldewunsches auswählt.

4. Verfahren nach Anspruch 3,
**dadurch gekennzeichnet, dass** der neue Teilnehmer (T0) die Reihenfolge potentieller Zwischenstationen auf seiner Liste entsprechend der Stärke des jeweiligen Antwortsignals festlegt.

5. Verfahren nach Anspruch 3 oder 4,
**dadurch gekennzeichnet, dass** der neue Teilnehmer (T0) zunächst prüft, ob eine Zentrale auf sein ungerichtetes Suchtelegramm antwortet, und dass er in diesem Fall die Zentrale an die erste Stelle seiner Liste setzt.

6. Verfahren nach Anspruch 3,
**dadurch gekennzeichnet, dass** der neue Teilnehmer für die Reihenfolge seiner Liste potentieller Zwischenstationen festlegt, wie viele Hierarchiestufen jeder antwortende Teilnehmer von seiner Zentrale entfernt ist.

7. Verfahren nach Anspruch 3,
**dadurch gekennzeichnet, dass** der neue Teilnehmer (T0) für die Reihenfolge seiner Liste die System-Identifikatoren (X, Y) der antwortenden Teilnehmer bewertet.

8. Verfahren nach einem der Ansprüche 1 bis 7,
**dadurch gekennzeichnet, dass** der neue Teilnehmer (TY6) nach erfolgreicher Anmeldung ein zweites Suchsignal an alle in Funkreichweite befindlichen Teilnehmer aussendet und anschließend die Zentrale (ZY1) über alle in seiner Funkreichweite erreichbaren Teilnehmer (TY4, TY5) des Funksystems (FS2) informiert.

9. Verfahren nach Anspruch 8,
**dadurch gekennzeichnet, dass** der neue Teilnehmer (TY6) der Zentrale (ZY1) mitteilt, mit welcher Feldstärke er die Signale der von ihm erreichbaren Teilnehmer (TY4, TY5) empfängt, und dass die Zentrale (ZY1) aus diesen Daten eine optimale System-Konfiguration für die Nachrichtenübermittlung über Zwischenstationen erstellt und den Teilnehmern des Funksystems (FS2) mitteilt.

10. Verfahren nach Anspruch 1,
**dadurch gekennzeichnet, dass** die Telegramme des jeweiligen neuen Teilnehmers (TO) mit ihrer vorläufigen Adresse genauso weitergeleitet werden wie die Telegramme mit einer endgültigen Adresse, wobei auf dem Weg zu der Zentrale (ZY1) jeweils als Zwischenstationen durchlaufene Teilnehmer (TY5) so markiert werden, dass die Rückmeldung von der Zentrale zu dem sich anmeldenden Teilnehmer (TO) auf dem gleichen Weg zurückläuft.

11. Verfahren nach Anspruch 10,
**dadurch gekennzeichnet, dass** die Markierung der durchlaufenen Teilnehmer (TY5) durch Aufsammeln ihrer jeweiligen Adressen in dem weitergeleiteten Telegramm erfolgt.

12. Verfahren nach Anspruch 10,
**dadurch gekennzeichnet, dass** die Markierung der durchlaufenen Teilnehmer (TY5) durch eine Kennzeichnung erfolgt, die eine Leitweglenkung (Routing) mit verteilten Listen ermöglicht.

## Claims

1. Method for registering a new subscriber and radio system of an alarm installation with a central system and a plurality of subscribers, in which case the central system (ZX1, ZY1) and the subscribers (TX2, TX3; TY2 to TY5) each feature a transmit and a receive device and in which case each subscriber can establish radio contact with the central system directly or indirectly via one or more other subscribers as routers, with the following steps:
- The new subscriber (T0) sends a search telegram to all subscribers that can be reached (TY5, TY4; ZX1, TX2, TX3) and selects from the subscribers which respond a first router (TY5);
- The new subscriber (T0) sends to the selected first router (TY5) a registration request in the form of a message, which contains a provisional own address (T0) and as a destination specification the central system (ZY1) assigned to the first router;
- As soon as the registration request from the first router (TY5) has been forwarded to the central system (ZY1), the central system decides whether to accept or reject the registration request, und
- On acceptance the central system (ZY1) sends a response telegram via the first router (TY5) which contains a subscriber number (TY6) and a system identifier (Y) which is accepted and stored by the new subscriber.

2. Method in accordance with claim 1,
**characterized in that**, on rejection of the registration request by central system (ZY1) the new subscriber (T0) selects another first router (TX3) of another radio cell (FS1) and sends a registration request via this station to its central system (ZX1).

3. Method in accordance with claim 1,
**characterized in that**,
- after the search telegram of the new subscriber (T0) all subscribers located within radio range (TY4, TY5; ZX1, TX2, TX3) respond by sending their address and an identifier of their radio system (Y; X) to the new subscriber (T0),
- this subscriber stores the addresses and the associated system identifications in a list of potential routers, for which it defines the order in accordance with a prespecified evaluation algorithm, and
- the new subscriber selects its first router (TY5) from the list in accordance with its order and if its registration request is rejected by the radio system of the first router (TY5), selects a further router in each case in accordance with the prespecified order of the list (TX3) for sending the registration request again.

4. Method in accordance with claim 3,
**characterized in that** the new subscriber (T0) defines the order of potential routers on its list in accordance with the strength of the relevant response signal.

5. Method in accordance with claim 3 or 4,
**characterized in that** the new subscriber (T0) first checks whether a central system is responding to its search telegram and that in this case it puts the central system at the top of its list.

6. Method in accordance with claim 3,
**characterized in that** the new subscriber defines for the order of its list of potential routers how many hierarchy stages away each responding system is from its central system.

7. Method in accordance with claim 3,
**characterized in that** the new subscriber (T0) evaluates the system identifiers (X, Y) of the responding subscribers for the order of its list.

8. Method in accordance with one of the claims 1 to 7,
**characterized in that** the new subscriber (TY6), after a successful registration, sends out a second search signal to all subscribers located within its radio range and subsequently informs the central system (ZY1) about all subscribers that can be reached in its radio range (TY4, TY5) of radio system (FS2).

9. Method in accordance with claim 8,
**characterized in that** the new subscriber (TY6) notifies the central system (ZY1) about the field strength with which it is receiving the signals from the subscribers that it can reach (TY4, TY5), and that the central system (ZY1) creates from this data an optimum system configuration for transmission of messages via routers and notifies the subscribers of radio system (FS2) about this.

10. Method in accordance with claim 1,
**characterized in that** the telegrams of the new subscriber in each case (T0) with their provisional address, are forwarded in precisely the same way as the telegrams with a unique address, in which case on the way to the central system (ZY1) the routers of the subscribers (TY5) through which the messages pass are marked so that the response from the central system to the registering subscriber (T0) travels back on the same path.

11. Method in accordance with claim 10,
**characterized in that** the subscribers through which the messages pass (TY5) are marked by collecting their relevant addresses in the forwarded telegram.

12. Method in accordance with Claim 10,
**characterized in that** the subscribers through which the messages pass (TY5) are marked by an identifier which allows routing with distributed lists.

## Revendications

1. Procédé pour l'inscription d'un nouvel abonné dans un système radio d'une installation d'avertissement de danger avec une centrale et une pluralité d'abonnés, la centrale (ZX1, ZY1) et chaque abonné (TX2, TX3 ; TY2 à TY5) présentant chacun un dispositif d'émission et un dispositif de réception et chaque abonné pouvant entrer en contact radio avec la centrale directement ou indirectement au moyen d'un ou de plusieurs autres abonnés en tant que stations intermédiaires, comprenant les étapes suivantes :
- le nouvel abonné (T0) envoie une interrogation de recherche sous la forme d'un télégramme de recherche non dirigé à tous les abonnés (TY5, TY4 ; ZX1, TX2, TX3) joignables et choisit parmi les abonnés répondant une première station intermédiaire (TY5) ;
- le nouvel abonné (T0) envoie à la première station intermédiaire (TY5) choisie un souhait d'inscription sous la forme d'un message, qui contient une adresse (T0) propre provisoire et comme indication de cible la centrale (ZY1) attribuée à la première station intermédiaire ;
- dès que le souhait d'inscription a été transmis de la première station intermédiaire (TY5) à la centrale (ZY1), la centrale décide de l'acceptation ou du refus du souhait d'inscription, et
- en cas d'acceptation, la centrale (ZY1) envoie par la première station intermédiaire (TY5) un télégramme de réponse, qui contient un numéro d'abonné (TY6) et un identificateur de système (Y), qui sont pris en charge et mémorisés par le nouvel abonné.

2. Procédé selon la revendication 1,
**caractérisé en ce que**, en cas de refus du souhait d'inscription par la centrale (ZY1), le nouvel abonné (T0) sélectionne une autre première station intermédiaire (TX3) d'une autre cellule radio (FS1) et envoie un souhait d'inscription par celle-ci à sa centrale (ZX1).

3. Procédé selon la revendication 1,
**caractérisé en ce que**,
- après le télégramme de recherche non dirigé du nouvel abonné (T0), tous les abonnés se trouvant dans la zone de portée radio (TY4, TY5 ; ZX1, TX2, TX3) envoient leur adresse et un identificateur de leur système radio (Y ; X) au nouvel abonné (T0),
- **en ce que** celui-ci mémorise les adresses et les identificateurs de système correspondants dans une liste de stations intermédiaires potentielles, dont il définit l'ordre de succession selon un algorithme d'évaluation prédéfini, et
- **en ce que** le nouvel abonné sélectionne sa première station intermédiaire (TY5) dans la liste selon son ordre de succession et en cas de refus de son souhait d'inscription par le système radio de la première station intermédiaire (TY5), il sélectionne selon l'ordre de succession prédéfini de la liste respectivement une autre station intermédiaire (TX3) pour un nouvel envoi du souhait d'inscription.

4. Procédé selon la revendication 3,
**caractérisé en ce que** le nouvel abonné (T0) définit l'ordre de succession de stations intermédiaires potentielles sur sa liste en fonction de l'intensité du signal de réponse respectif.

5. Procédé selon la revendication 3 ou 4,
**caractérisé en ce que** le nouvel abonné (T0) vérifie d'abord qu'une centrale répond à son télégramme de recherche non dirigé et **en ce que**, dans ce cas, il met la centrale à la première place de sa liste.

6. Procédé selon la revendication 3,
**caractérisé en ce que** le nouvel abonné définit pour l'ordre de succession de sa liste de stations intermédiaires potentielles de combien de niveaux de hiérarchie chaque abonné répondant est éloigné de sa centrale.

7. Procédé selon la revendication 3,
**caractérisé en ce que** le nouvel abonné (T0) évalue pour l'ordre de succession de sa liste les identificateurs de système (X, Y) des abonnés répondant.

8. Procédé selon l'une quelconque des revendications 1 à 7,
**caractérisé en ce que** le nouvel abonné (TY6) envoie après la demande effectuée un second signal de recherche à tous les abonnés se trouvant à portée de radio et informe ensuite la centrale (ZY1) sur tous les abonnés (TY4, TY5), joignables dans sa portée radio, du système radio (FS2).

9. Procédé selon la revendication 8,
**caractérisé en ce que** le nouvel abonné (TY6) signale à la centrale (ZY1) avec quelle intensité de champ il reçoit les signaux des abonnés (TY4, TY5) joignables par lui et **en ce que** la centrale (ZY1) établit à partir de ces données une configuration de système optimale pour la transmission de messages au moyen de stations intermédiaires et la communique aux abonnés du système radio (FS2).

10. Procédé selon la revendication 1,
**caractérisé en ce que** les télégrammes du nouvel abonné (T0) respectifs sont transmis avec leur adresse provisoire de la même façon que les télégrammes avec une adresse définitive, les abonnés (TY5) traversés respectivement comme stations intermédiaires sur le chemin allant à la centrale (ZY1) étant marqués de telle sorte que le message de retour allant de la centrale à l'abonné (T0) qui s'inscrit revient par le même chemin.

11. Procédé selon la revendication 10,
**caractérisé en ce que** le marquage des abonnés (TY5) traversés s'effectue par la collecte de leurs adresses respectives dans le télégramme transmis.

12. Procédé selon la revendication 10,
**caractérisé en ce que** le marquage des abonnés (TY5) traversés s'effectue par une identification qui permet un acheminement de messages (routing) avec des listes distribuées.
